**Europäisches Patentamt**

**European Patent Office**

**Office européen des brevets**

(19)

(11) Publication number : **0 342 174 B1**

(12)

# EUROPEAN PATENT SPECIFICATION

(45) Date of publication of patent specification :
15.07.92 Bulletin 92/29

(51) Int. Cl.⁵ : **B60K 20/04, B62D 33/067**

(21) Application number : **89850148.1**

(22) Date of filing : **09.05.89**

(54) **Gear shift mechanism for tilt cab vehicles.**

(30) Priority : **09.05.88 SE 8801751**

(43) Date of publication of application :
**15.11.89 Bulletin 89/46**

(45) Publication of the grant of the patent :
**15.07.92 Bulletin 92/29**

(84) Designated Contracting States :
**AT BE CH DE FR GB IT LI LU NL SE**

(56) References cited :
**DE-B- 2 110 310
DE-B- 2 328 230
US-A- 4 220 217
US-A- 4 235 299
US-A- 4 269 282**

(73) Proprietor : **AB VOLVO
Assar Gabrielssons väg Torslanda
S-405 08 Göteborg (SE)**

(72) Inventor : **Thoreson, Torsten
Solskiftegatan 20
S-442 53 Kungälv (SE)**

(74) Representative : **Hellbom, Lars Olof et al
H. Albihns Patentbyra AB Box 3137
S-103 62 Stockholm (SE)**

## Description

The present invention relates to a gear shift mechanism in a motor vehicle having a cab which is tiltable relative to the vehicle chassis and engine/transmission, said mechanism comprising a gear lever and a gear lever receiving mounting arranged under the cab floor or the engine hood and carrying a lever supporting bearing assembly which comprises first and second bearing elements the first one of which being pivotable in relation to the second one, said gear lever extending from the interior of the cab through a hole in the floor to the bearing assembly.

In trucks with front mounted tiltable cabs, in which the engine is usually mounted under the cab and is covered by a hood between the seats, the gear shift lever and associated linkages must be arranged so that they do not present an obstacle to the tilting movement. The arrangement should be such that the gear selector has distinct positions and it should only be minimally affected by the movements of the cab, which can, in todays modern trucks with comfortable spring mounted cabs, be relatively large in all directions relative to the chassis and engine/transmission. Furthermore the gear selector mechanism should be sealed off effectively so that a low noise level can be maintained in the cab. Finally, the gear shift mechanism should be simple and reliable and permit tilting of the cab without any additional "releasing operations".

None of the solutions presented up to now fulfill all of these conditions. While it is true that gear selector mechanisms with the lever mounting fixed to the transmission usually have distinct positions and are only minimably effected by cab movements, they have either sealing problems (in unarticulated lever designs) because the hole in the engine hood or floor must be large or they require extra blocking mechanisms for the release means (for articulated lever designs) (see for example SE-B- 439 464).

Gear shift mechanisms with the shift lever bearing joined to the cab are simpler to seal in order to keep the noise level low, but in this case the shift lever must be able to somehow be released from the rest of the shift mechanism when the cab is tilted. These mechanisms are, however, affected by cab movements with indistinct gear speed positions as a result as well as problems with the gear selector being jolted out of gear when driving on uneven surfaces.

Gear shift mechanisms, in which the shift lever bearing is resiliently joined to the cab, are shown in DE-B-2 110 310 and US-A-4 269 282, for example. In both of these mechanisms, the shift lever has a spherical end portion which is normally received in an opening in the gear transfer mechanism. This end portion is removed from this opening when the cab is tilted. The spring loaded mounting of the bearing in the cab permits limited shock absorbing movement of the cab without any problems, but large vertical cab movements or lateral movements present the risk that the spring loaded shift lever mounting housing will lose contact with its stationary support surface in the gear lever socket in the engine/transmission, resulting in play, misalignment and malfunctioning. Hard and rapid gear shifting can have the same result. Another disadvantage is that it is not possible to provide a connection free from play between the lever and the gear transfer mechanism. In order to permit disengagement and engagement, there must be a certain amount of play between the spherical end of the lever and the complementary socket in the gear transfer mechanism. This play increases with time due to wear and produces an even larger effect at the shift lever handle which produces indistinct gear selection.

The purpose of the present invention is to remove all of the above mentioned disadvantages and provide a shift mechanism of the type described by way of introduction, which is simple and reliable, has distinct gear positions, is simple to seal off to provide low noise level inside the cab, and which does not require any additional release steps prior to tilting the cab or any engaging steps after tilting the cab back to its operating position.

This is achieved according to the invention in that the lever receiving mounting is securely mounted on the engine/transmission, that the lever is removably connected to the first bearing element to be detached from it when there is lever movement caused by the tilting movement of the cab and that the lever is connected with limited mobility to the cab and, in the tilted position of the cab, is spring loaded by spring means to a defined disposition in the hole in the floor or engine hood.

The direct connection between the shift lever and a bearing securely joined to the engine/transmission provides distinct shift positions arid negligible risk of the gear selector being jolted out of gear, since the shift mechanism is not affected by the cab movements. By placing the lever connection directly in the bearing, the lever will always be in the through-hole in the floor or engine hood regardless of the position of the cab, thus eliminating the need for separating sealing surfaces. An undivided sealing means can be used between the lever and the edges of the through-hole, thus making effective noise insulation possible.

The mechanism also permits comparatively large relative movments in all directions between the cab and the engine/transmission. The cab can be tilted up or down regardless of the gear selector position.

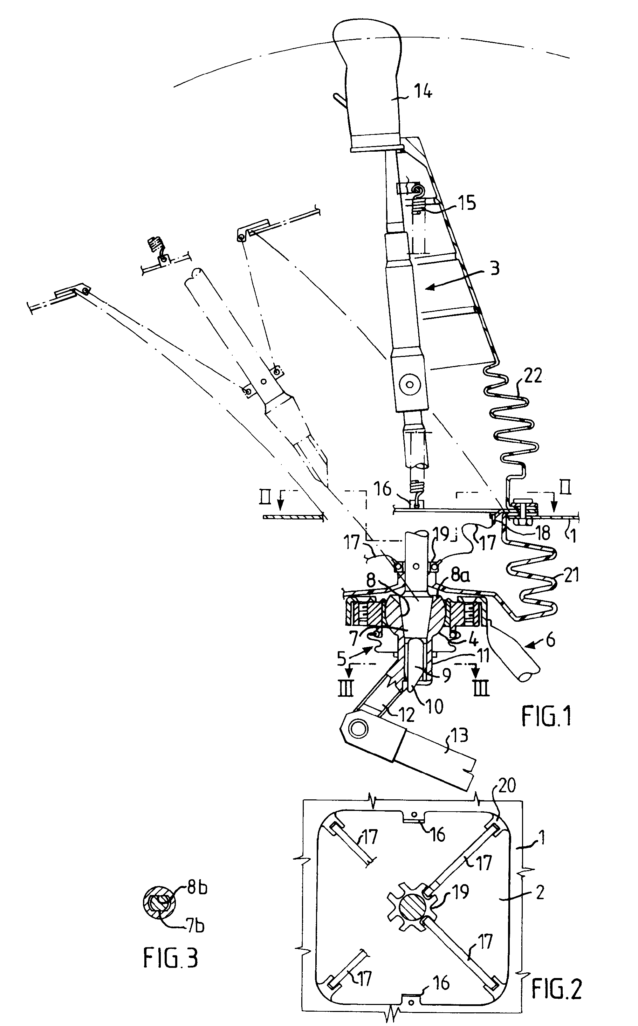

The invention will be described in more detail with reference to an example shown in the accompanying drawing, where Figure 1 shows a partially sectioned schematic side view of the gear shift mechanism according to the invention, Figure 2 shows a view along the line II-II in Figure 1, and Figure 3 shows a cross-sectional view along the line III-III in Figure 1.

In the Figure, 1 designates a plate constituting a part of a floor or an engine hood in a truck cab and 2 is an opening forming a through-hole for a shift lever generally designated 3, which, in a manner to be described in more detail below, is connected to a ball 4 of a ball joint 5 in a lever receiving mounting 6. The mounting 6 is fixed to the vehicle engine, the transmission or some component joined thereto (not shown), so that there is no relative movement between the shift lever 3 and the transmission when there is relative movement between the plate 1 and the engine/transmission, i.e. during shock absorbing movements of the cab.

The gear shift lever 3 is made with a conical portion 7 and the ball 4 has in it a complementary cavity or socket 8, in which the conical portion 7 is received when the cab is in its normal untilted position. The socket 8 has an upper edge portion 8a with a larger conical angle than the rest of the socket and two opposing planer surfaces 8b. The conical portion 7 of the shift lever has corresponding planer surfaces 7b, thus preventing rotation of the lever 3 relative to the ball. Below the conical portion 7, the lever has a somewhat narrower portion 9 with a pointed end 10. This is received in a tubular extension 11 of the ball 4. The extension 11 ends with a short angled arm 12, which is joined via a joint provided with a needle bearing to a shifting rod 13, connected to the gear transfer mechanism of the transmission.

One end of each of a pair of tensile springs 15 is hooked near to the gear lever handle 14. The other ends of the springs are attached to individual eyes 16 in the plate 1, so that in the normal untilted position of the cab, the lever 3 is spring loaded towards the lever receiving mounting 6 and so that its conical portion 7 is held pressed without play into the socket 8. Between the lever 3 and the through-hole 2, four flexible elements 17 in the form of bands or wires are attached to a flange 18 around the through-hole 2 and in individual plates 19 welded to the lever. Figure 2 shows one of the four flexible elements 17 with associated plate 19. The anchoring points for the three other elements are designated 20.

When the cab is tilted, the lever 3 is pulled upwards by the flexible elements 17 and is separated from the ball 4 of the ball joint. At the same time the springs 15 load the lever downwards and keep the elements 17 (the bands or wires) tensioned. Together with the springs, the elements 17 fix the lever 3 in a defined position in the hole 2 in the floor/engine hood 1, as indicated by the dash dot lines in Figure 1. As a result thereof, the pointed end of the lever 3 will also have a defined position in relation to the conical socket 8. The components have such dimensions that the pointed end 10 of the lever 3 is guided into the socket 8 regardless of the gear selector position, when the cab is tilted back to its normal operating position. This is achieved by virtue of the fact that the wide conical portion 8a is disposed so close to the center of rotation of the ball 4 that its position changes very little between the different gear positions.

In the embodiment described above, it is possible to use an undivided sealing bellows 21 and a common sleeve covering 22 between the edge of the through-hole 2 and the lever 3.

## Claims

1. Gear shift mechanism in a motor vehicle having a cab which is tiltable relative to the vehicle chassis and engine/transmission, said mechanism comprising a gear lever (3) and a gear lever receiving mounting (6) arranged under the cab floor or the engine hood (1) and carrying a lever supporting bearing assembly (5) which comprises first and second bearing elements the first one (4) of which being pivotable in relation to the second one, said gear lever extending from the interior of the cab through a hole (2) in the floor to the bearing assembly, characterized in that the lever receiving mounting (6) is securely mounted on the engine/transmission, that the lever (3) is removably connected to the first bearing element (4) to be detached from it when there is lever movement caused by the tilting movement of the cab and that the lever (3) is connected with limited mobility to the cab and, in the tilted position of the cab, is spring loaded by spring means (15) to a defined disposition in the hole (2) in the floor (1) or engine hood.

2. Gear shift mechanism according to claim 1, characterized in that flexible elements (17) connect the lever (3) to the cab and that tensile spring means (15) are tensioned between the lever and the cab and load the lever towards the lever receiving mounting.

3. Gear shift mechanism according to claim 1 or 2, characterized in that the bearing (5) is a ball joint with a ball (4) which has a profile cavity or socket (8), and that the lever (3) has an end portion (7), which in the normal untilted position of the cab is received in the socket and has a profiled portion fitted therein.

## Patentansprüche

1. Getriebeschaltmechanismus bei einem Kraftfahrzeug mit einem Fahrerhaus, das relativ zu Fahrzeugchassis und Motor/Getriebe kippbar ist, wobei der Mechanismus einen Schalthebel (3) und einen Schalthebelaufnahmerahmen (6) umfaßt, der unter dem Fahrerhausboden oder der Motorhaube (1) angeordnet ist und eine Hebelaufnahmelagerbaugruppe (5) trägt, die erste und zweite Lagerelemente umfaßt, von denen das erste (4) gegenüber dem zweiten verschwenkbar ist, wobei sich der Schalthebel von dem Inneren des Fahrerhauses durch eine Öffnung (2) in dem Boden zu der Lagerbaugruppe erstreckt, dadurch gekennzeichnet, daß der Hebelaufnahmerahmen (6) fest auf dem Motor/Getriebe angebaut ist, daß der Hebel (3) lösbar mit dem ersten Lagerelement (4) verbunden ist, um von diesem bei einer durch die Kippbewegung des Fahrerhaus verursachten Hebelbewegung, abgelöst zu werden, und daß der Hebel (3) mit begrenzter Beweglichkeit mit dem Fahrerhaus verbunden ist, und in der gekippten Stellung des Fahrerhauses mittels Federeinrichtungen (15) an eine definierte Anordnung in der Öffnung (2) in dem Boden (1) oder der Motorhaube federbelastet ist

2. Getriebeschaltmechanismus nach Anspruch 1, dadurch gekennzeichnet, daß flexible Elemente (17) den Hebel (3) mit dem Fahrerhaus verbinden und daß Zugfedereinrichtungen (15) zwischen den Hebel und das Fahrerhaus gespannt sind und den Hebel gegen den Hebelaufnahmerahmen drücken.

3. Getriebeschaltmechanismus nach Anspruch 1 oder 2, dadurch gekennzeichnet, daß das Lager (5) ein Kugelgelenk mit einer Kugel (4) ist, das einen profilierten Hohlraum oder Sockel (8) aufweist, und daß der Hebel (3) einen Endabschnitt (7) aufweist, der in der normalen nichtgeschwenkten Fahrerhausstellung in dem Sockel aufgenommen ist und einen darin angepaßten profilierten Abschnitt aufweist.

## Revendications

1. Mécanisme de sélection de vitesse dans un véhicule à moteur ayant une cabine basculante relativement au châssis et au moteur/transmission du véhicule, le mécanisme comprenant un levier de changement de vitesse (3) et un bâti (6) de montage du levier de changement de vitesse agencé sous le plancher de la cabine ou le capot du moteur (1) et portant un ensemble (5) de palier d'appui de levier comprenant des premier et second éléments de palier, le premier (4) des deux pouvant pivoter par rapport au second, le levier de changement de vitesse s'étendant de l'intérieur de la cabine, à travers un trou (2) du plancher à l'ensemble de palier, caractérisé en ce que le bâti (6) de montage du levier est monté immobilisé sur le moteur/transmission, en ce que le levier (3) est relié en étant déplaçable au premier élément (1) de palier de façon à être détaché de celui-ci lorsqu'il y a un mouvement de levier causé par le mouvement de basculement de la cabine et en ce que le levier (3) est relié à la cabine en étant déplaçable de façon restreinte et, en position basculée de la cabine, est sollicité élastiquement par des moyens (15) à ressort vers une disposition définie dans le trou (2) dans le plancher (1) ou le capot de moteur.

2. Mécanisme de sélection de vitesse selon la revendication 1, caractérisé en ce que des éléments flexibles (17) relient le levier (3) à la cabine et en ce que des moyens (15) à ressort extensible sont tendus entre le levier et la cabine et sollicitent le levier vers le bâti de montage de levier.

3. Mécanisme de sélection de vitesse selon la revendication 1 ou 2, caractérisé en ce que le palier (5) est un joint à rotule muni d'une rotule (4) comportant une cavité profilée ou douille (8), et en ce que le levier (3) comporte une partie d'extrémité (7), laquelle, en position non basculée normale de la cabine, est reçue dans la douille et est munie d'une partie profilée emboîtée dans celle-ci.

14

15

3

22

16

18

1

17

19

17

8

8a

7

4

6

5

11

9

10

12

13

21

FIG.1

8b

7b

FIG.3

20

17

16

1

17

19

2

17

17

16

FIG.2